# EUROPEAN PATENT APPLICATION

(11) **EP 0 667 577 A1**
(43) Date of publication of application: **16.08.1995**
(21) Application number: 95200343.2
(22) Date of filing: 13.02.1995
(51) Int. Cl.: G06F 12/00, G06F 1/00

(54) **Procedure for data file authentication**

(30) Priority: 11.02.1994 NL 9400222
(71) Applicant: Westra, Seerp, NL-3571 XL Utrecht (NL)
(72) Inventor: Westra, Seerp, NL-3571 XL Utrecht (NL)
(74) Representative: Merkelbach, B.

(57) **Abstract**

Proposed is a procedure for the subsequent demonstrable initial electronic storage, particularly of a digitizable document insensitive to computer fraud, such as a computer file established on a given date. The object is to lend legal probative value to such electronically established and stored documents, by comparison to the original. As a result, unauthorized changes made later are detected immediately. This is achieved/calculated by means of a computer program which in accordance with a particular mathematical algorithm records a unique number for a document, by means of an unchanging so-called check sum, i.e. the Message Authentication Code.

## Description

The invention involves a procedure for subsequently demonstrable initial electronic storage, particularly of a digitizable document insensitive to computer fraud, such as a computer file established on a given date.

The object of the invention is to lend probative value to electronically stored documents, such as computer files, whenever needed. This is done by means of so-called authentication of data files. In its simplest form, this is intended to demonstrate in a legally reliable way, at a later stage, that a particular document which has been established on a given date (e.g. an agreement), when reproduced for some reason, has remained unchanged even after a certain period of time has lapsed. Specifically, this can be used in a verification procedure to check that no changes whatsoever have been made.

To that end a computer program calculates, in accordance with a particular mathematical algorithm, two unique numbers of a document, e.g. a computer file, viz. the so-called check sums or Message Authentication Codes, hereafter to be referred to as MACs. If said computer file remains absolutely unchanged, a repetition of that calculation with the same program will once again produce exactly the same MACs. And, conversely, the slightest change in the document will always result in different MAC numbers. By 'anchoring', so to speak, the two MAC values in time, e.g. by publishing the MAC in a daily newspaper of which copies are available for public perusal, a dual checking option is obtained. Preferably, this anchoring in time should be effected through a reliable third party.

Up to now there has not been any real need yet for the highest degree of certainty in authentication of data files. However, in the computer age, and also on account of the ever present old-fashioned mediums of proof which are becoming increasingly sensitive to fraud, it has become necessary to apply to that highest degree of certainty to the aforementioned method of authentication of data files as well.

According to the invention, this is achieved by enabling the user to prove beyond doubt that since the time of the initial storage said document has remained entirely unchanged in every respect. To that end such document is stored after being attributed two unique codes (MACs), which code is derived from or calculated with, respectively, a first computer program calculating two unique codes according to a particular mathematical algorithm. The result, preferably in the form of e.g. an authentication file name, is subsequently recorded and/or registered in a publication medium, in particular a dated Gazette or similar reliable medium of verification, accessible to anyone, this being the so-called data file authentication of the document. A second virtually identical computer program serves as a checking program; it operates by the same calculation method, using a key which is identical for both programs. This program can, preferably, be made available to someone who, for reasons of his own, wishes to perform a first objective check on the presence of the allegedly unchanged version of the authenticated document on the initial storage date, all this in such a way that for a subsequent legal and conclusive verification regarding the original time of existence of the authenticity in relation to this document, no assistance whatsoever is needed from the person(s) who once executed the basis of the data file authentication, while it is not possible, when recalculating for that purpose, to subsequently influence the programmatic set-up for that data file authentication in any respect and/or at any later time.

According to the invention this set-up can be achieved because the first computer program also performs a calculation for each user or licencee by means of the exclusive hardcoded secret key assigned to each user, which can be made visible on the user screen at any time, by means of which the second (checking) program can reproduce the second unique code published earlier, in order to prove the authenticity of said (checking) program.

Another result of the procedure as provided for by the invention is that the user is no longer dependent on e.g the records of an authenticator such as a notary public, a registration inspector or the like to be able to carry out the necessary reliable checking of time and original unchanged contents of a document, but instead he can independently and objectively reach the required conclusion with respect to the authentication of data files. This is achieved by making the second computer program available to anyone requesting same for the purpose of a possible later checking of time and contents of the document, e.g. on the basis of depositing same with a notary public.

By following the procedure as advocated by the invention it has now become possible to even supply electronically stored files adapted in this way, while fully meeting the check which is essential to that end. In particular this may play a part with bank transactions in which the proof of an implementation date is/becomes critical.

The invention enables the user to avoid and/or subsequently detect any sensitivity to fraud if the first and second computer programs are fully identical, so that also the hardcoded secret key of the first computer program is integrated into the second computer program.

Below the invention will be explained further, by means of the instructions for use, in which the new procedure will be referred to as CertiFile® (® registered trademark).

### TECHNICAL AND LEGAL ASPECTS IN DETAIL

### Authentication of data files

Increasingly, documents are only stored electronically and exchanged in the form of computer files. Since any computer file can be changed at will, this can hardly serve as a piece of evidence.

CertiFile, however, offers you a program and a method which do lend probative value to a computer file: authentication of data files.

### Method of operation

The CertiFile program locks a computer file by calculating two so-called check sums. These are unique numbers, resulting from a particular series of mathematical calculations. They enable the user to check whether or not a file has remained absolutely identical since a previous calculation. If the slightest change has been made to that file, then a recalculation will never produce the same check sums. Therefore the authenticity of a locked file can be determined later, on the basis of the two check sums. The CertiFile program carries out the calculations in accordance with the algorithms of ISO standard 8731-2, as also used in payment transactions (International Standard ISO 8731-2, second edition 1992-09-15: Banking - Approved algorithms for message authentication - Part 2: Message authenticator algorithm.).

TNO, the Dutch Organization for Applied Scientific Research, has tested and confirmed the correct implementation of this ISO standard in the CertiFile program.

### Two check sums based on two keys

The two check sums always consist of 8 characters, e.g 28A4D5E6 and E267F9A1. The first check sum (public check sum) is calculated by means of the so-called public key, which is the same for every program supplied. The second check sum (private check sum) is calculated by means of the so-called private key, which differs for each licencee, i.e. for each program supplied.

### The public check sum

When locking, the program makes an exact copy of the adapted file, the so-called retention copy. This retention copy receives a new file name, the first 8 characters of which consist of the public check sum. For instance, the copy of file CONTRACT.DLK may get file name 28A4D5E6.000. Thus the public check sum can always be deduced from the file name of the retention copy. This makes subsequent checking very simple (further details under Checking Program).

### The private check sum

The private check sum is an extra. It serves to rule out fraud with the Checking Program in case of a verification procedure.

### Recording of the check sums

For a subsequent verification the public check sum (incorporated into the backup copy file name) and the private check sum must be unchangeably recorded in time. Sometimes a mutually dated and signed statement may suffice to that end, e.g. in those cases in which the opponent is already known, such as in an exchange of computer files. However, if a possible opponent is not yet known, CertiFile B.V. may be called in for a valid time stamp: publication in a Gazette.

### Time stamp: Gazette

The user informs CertiFile of the backup copy file name and the private check sum. (The program automatically includes these in a Report Message to be faxed to CertiFile, see p. 5). Hour and minute of receipt are noted. CertiFile puts these data into the Gazette of that or the next day.

Authentication of data files after 20 September 10.00 hrs.
001-10.44 | 1AC71B2A.000 | 27D8D23E
002-14.06 | 28A6443E.000 | A34D7A24
003-15.22 | 5D4A34A2.000 | 3E34A98D
004-16.45 | 5AD53A1A.000 | 13E59821
etc.

With this the circle is round: the contents of the file are frozen in the check sums and these, together with the time of the report, are frozen in time by being published in the Gazette.

In confirmation thereof the user receives a photocopy of the Gazette publication.

### Verification

In order to demonstrate that a file has not been changed since a particular date, the user only needs to show on a Personal Computer that the check sums the CertiFile program produces for that file are identical to the ones mentioned in the Gazette. However, an opponent could dispute the authenticity of the CertiFile program used. That is where the checking program CHECK.EXE comes in.

### Checking program CHECK.EXE

This program, which may be distributed freely, is located on the program disk in directory \ check. The instructions for use, as included below, are also located there in the form of a read.me file, intended for recipients of the checking program.

CHECK.EXE serves two purposes:
- checking by recipients of authenticated files
- verification

The program uses the same calculation method and the same public key as the CertiFile program.

### Operation of CHECK.EXE

Upon entering command CHECK the program displays the parameters that may be used (both upper case and lower case are permitted):
CHECK <[path] file name> [<private key>]

Items in square brackets are optional. After CHECK and a space the following may be entered:
1. the backup copy file name, possibly preceded by the path
2. idem, space, private key

The private key, which is different for each licencee, may be displayed on the screen with the CertiFile program, by using <set-up>. This key consists of 2 times 10 characters, separated by a space, e.g. 0X2A5E249B 0XA5D473B5.

### CHECK.EXE examples

The following are some examples of control commands, followed by the result CHECK.EXE displays on the screen:
CHECK A:\6AB45628.000
Public check sum matches file name!
or:
No match!

So it appears that either nothing or something has been changed in the authenticated file.
CHECK A:\6AB45628.00 0X2A5E249B 0XA5D473B5
Private check sum with key
0X2A5E249B 0XA5D473B5 is 3D5674B1

If nothing has been changed in the authenticated file, the private check sum recalculated now will be identical to that of the original locking (as stored in the log file and published in the Gazette.

If, however, something has been changed, then the private check sum calculated will not be the same.

### Protection against fraud

The CertiFile method offers four ways of protection against possible fraud with the CertiFile checking program by a licencee:
1. Addition of the private key to the CHECK.EXE command line.
2. Initial authentication by CertiFile of the checking program identical for every user, and publication thereof in the Gazette.
3. Inital locking by CertiFile of each CertiFile program supplied (CERTI.EXE) and publication thereof in the Gazette.
4. Depositing copies of the checking program with a notary public.

In extreme cases it is possible for a recipient of a locked file to make a deceptively genuine looking CHECK.EXE which puts the desired message on the screen.

The first way to counteract this is for the licencee to request that his private key be added to the command line. This is only effective if the fraudulent party did not know his private key before. In case he did (e.g. if he became acquainted with it during a previous, similar verification procedure, and incorporated it into the imitation CHECK.EXE), the licencee can lock the imitation CHECK.EXE with his CertiFile program, and demonstrate that the resulting public check sum differs from the one CertiFile initially published in the Gazette and printed on all packings and the like.

If thereupon the opponent should dispute the authenticity of the CertiFile program used, then the licencee may use that program to authenticate his own CERTI.EXE: the backup copy file name will be identical to the one CertiFile published in the Gazette after the program was supplied.

A fourth option to counteract presumed manipulations with the checking program is depositing with a notary public. This notary public holds original copies of the checking program and will make a copy available to contending parties at any licencee's request.

The four options to rule out fraud in verification procedures, as described above, can be regarded as adequate.

### Legal procedure

In principle, as is well-known, evidence in a legal procedure may be furnished by every means. The judge assesses the value of the evidence. The strength of the CertiFile data file authentication procedure is the increased authenticity: the judge will now be able to attach more weight to the value of this medium of evidence, as he will be more convinced that the evidence cannot have been tampered with.

Therefore the CertiFile procedure considerably increases the chances of a successful furnishing of proof.

## Claims

1. Procedure for subsequently demonstrable initial electronic storage, particularly of a digitizable document insensitive to computer fraud and other so-called hacker manipulations, such as a computer file established on a given date, with the object of subsequently being able to show beyond legal doubt that said document has remained unchanged in every respect since the time of the initial storage, which storage to that end is effected by means of attributing a unique code (MAC) to such document to be stored, which code is derived from a first computer program that calculates two different unique codes in accordance with a particular mathematical algorithm, which results are thereupon, preferably in the form of e.g. a file name, recorded and/or registered in a publication medium, in particular a dated Gazette or similar reliable medium of verification, accessible to anyone, this being the so-called authentication of data files of the document whereby a second virtually identical computer program serves as a checking program and which operates by the same calculation method, using a hard coded key which is identical for both programs which program can, preferably, be made available to someone who, for reasons of his own, wishes to perform a first objective check on the presence of the allegedly unchanged version of the authenticated document on the initial storage date, all this in such a way that for a subsequent legal and conclusive verification regarding the original time of existence of the authenticity in relation to this document, no assistance whatsoever is needed from the person(s) who once executed the basis of the data file authentication, while it is not possible, when recalculating for that purpose, to subsequently influence the programmatic set-up for that data file authentication in any respect and/or at any later time.

2. Procedure according to claim 1, characterised in that for each user (licencee) the first computer program also carries out a calculation by means of the exclusive so-called private hardcoded secret key assigned to each user, which can be made visible on the user screen at all times, by means of which the second checking program can reproduce the second unique key published earlier, in order to prove the authenticity of said checking program.

3. Procedure according to claim 2, characterised in that the second computer program, for possible later checking of time and contents of the document, is made available to anyone upon request, e.g. on the basis of depositing same with a notary public.

4. Procedure for the demonstrable authentic supply of electronically stored files or parts thereof, which are stored in accordance with the procedures outlined in any one of the foregoing claims.
